# EUROPÄISCHE PATENTSCHRIFT

(11) **EP 1 365 297 B1**
(45) Veröffentlichungstag und Bekanntmachung des Hinweises auf die Patenterteilung: **10.03.2004**
(21) Anmeldenummer: 02011280.1
(22) Anmeldetag: 22.05.2002
(51) Int. Cl.: G05B 19/05, G05B 19/042

(54) **System und Verfahren zur Anpassung anwendungsspezifischer Funktionsbausteine für ein Automatisierungsgerät**
System and method for adapting application-specific function blocks for an automation device
Système et procédé pour adapter des blocs fonctionnels d'application spécifique d'un dispositif d'automation

(43) Veröffentlichungstag der Anmeldung: 26.11.2003
(73) Patentinhaber: SIEMENS AKTIENGESELLSCHAFT, 80333 München (DE)
(72) Erfinder: Humpert, Hans-Dieter, 91334 Hemhofen (DE); Kleyer, Dieter, 91074 Herzogenaurach (DE)

(56) Entgegenhaltungen:
- US-A- 5 168 441
- US-A- 5 801 942

## Beschreibung

Verfahren und Projektierungssystem zum Erzeugen eines anwendungsspezifischen Funktionsbausteins für ein Automatisierungsgerät

In modernen technischen Anlagen werden meist eine Vielzahl von Verfahrensschritten, wie z.B. eine komplexe Regelung einer Komponente der technischen Anlage, von mindestens einem Automatisierungssystem übernommen, in welches Steuerungscode zum automatischen Ausführen der gewünschten Funktion geladen ist.

Im Laufe der Zeit haben sich im Bereich der Automatisierungstechnik häufig vorkommende, zu lösende Aufgabenstellungen herausgebildet, welche mittels der Automatisierungssysteme in immer wiederkehrenden Anwendungsfällen zu bearbeiten sind. Für eine Vielzahl dieser Aufgabenstellungen sind aus Softwarecode aufgebaute Funktionsbausteine als Prototypen erstellt worden, mittels welcher ein bestimmter Typ an Aufgabenstellung gelöst werden kann, beispielsweise die Regelung einer Anlagenkomponente mittels eines PID-Reglers.

Der PID-Regler kann dabei als vordefinierter Funktionsbaustein erstellt sein, welcher für eine Vielzahl von Regelungsaufgaben einsetzbar ist. Um einen derartigen vordefinierten Funktionsbaustein an eine konkret vorliegende Regelungsaufgabe anzupassen, ist es erforderlich, den vordefinierten Funktionsbaustein mit aktuellen Werten für dessen vorzugebende Parameter zu versorgen, damit die konkrete Regelungsaufgabe mittels des vordefinierten Funktionsbausteins gelöst werden kann. Im Falle des genannten PID-Reglers ist es beispielsweise mindestens erforderlich, die aktuellen Werte für die Parameter Proportionalverstärkung, Nachstellzeit und Integrationszeitkonstante vorzugeben.

Bei bekannten vordefinierten Funktionsbausteinen, welche meist in Softwarebibliotheken, klassifiziert entsprechend bestimmter Aufgabenstellungen, zusammengefasst sind, ist es sehr oft erforderlich, zur Lösung einer vorliegenden Aufgabe mittels des vordefinierten Funktionsbausteins diesen mit einer großen Anzahl an aktuellen Werten für dessen Parameter zu versorgen; beispielsweise sind vordefinierte komplexe PID-Regler-Funktionsbausteine erhältlich, welche die Vorgabe von etwa 100 Parametern erfordern.

Die oft sehr große Anzahl an vorzugebenden Parametern erklärt sich dadurch, dass die vordefinierten Funktionsbausteine geeignet sein müssen, unterschiedlichste Ausprägungen einer Aufgabenstellung zu lösen, anderenfalls würde das Vorhalten eines vordefinierten Funktionsbausteins in einer Softwarebibliothek keinen Sinn machen, da zur Lösung einer konkret vorliegenden Aufgabe in den meisten Fällen doch ein neuer Funktionsbaustein erstellt werden müsste, was die erwünschte Wiederverwendbarkeit von vordefinierten Funktionsbausteinen extrem einschränken würde.

Bekannte vordefinierte Funktionsbausteine umfassen in der Regel mehrere Teilfunktionen, deren Beitrag zur Lösung der gestellten Aufgabe mittels der Vorgabe von Parametern festlegbar ist.

Bei vielen praktisch vorkommenden Automatisierungsaufgaben können vordefinierte Funktionsbausteine verwendet werden, jedoch sind zur Lösung der gestellten Automatisierungsaufgabe nur in einigen Fällen alle vom vordefinierten Funktionsbaustein umfassten Teilfunktionen erforderlich. Die nicht benötigten Teilfunktionen müssen dann bei der Vorgabe der Parameter für den Funktionsbaustein beispielsweise derart mit aktuellen Parameterwerten versorgt werden, dass sie die von den benötigten Teilfunktionen berechneten Ergebnisse nicht beeinflussen. Beispielsweise sind Logarithmusbausteine bekannt, mittels welcher der Logarithmus eines anliegenden Eingangssignals berechnet wird und dieser berechnete Wert anschließend in einer zweiten Teilfunktion mit einem Faktor multiplizierbar ist. Wird nun diese zweite Teilfunktion des vordefinierten Logarithmusbausteins nicht benötigt, so muss die zweite Teilfunktion mit einem aktuellen Parameterwert gleich 1 versorgt werden, so dass der Logarithmus des Eingangsignals - welcher von der ersten Teilfunktion berechnet wird - von der zweiten Teilfunktion lediglich mit dem Faktor 1 multipliziert wird, was den berechneten Wert wie gewünscht nicht stört. Jedoch ist dabei die Vorgabe des Multiplikationsparameters für die zweite Teilfunktion notwendig, wobei die Vorgabe dieses Parameters an sich unnötig ist, da die entsprechende Teilfunktion nicht erforderlich ist.

Dem Vorteil der Wiederverwendbarkeit des vordefinierten Funktionsbausteins steht also der Nachteil eines erhöhten Aufwands bei der Vorgabe der Parameter für die Teilfunktionen entgegen, wenn nicht alle Teilfunktionen des vordefinierten Funktionsbausteins für die Lösung der Automatisierungsaufgabe benötigt werden.

Betrachtet man beispielsweise den vorher genannten vordefinierten Funktionsbaustein eines PID-Reglers, so kann dieser selbstverständlich zur Regelung einer Anlagenkomponente mittels eines PI-Reglers eingesetzt werden. In diesem Falle ist jedoch dafür Sorge zu tragen, dass diejenige Teilfunktion des vordefinierten PID-Reglers, welche den D-Anteil des PID-Reglers realisiert, u.a. durch eine geeignete Vorgabe an aktuellen Parametern außer Kraft gesetzt wird, so dass der vordefinierte PID-Regler die gewünschte Funktion als PI-Regler übernehmen kann.

Genau wie beim Beispiel des Logarithmusbausteins steht hier dem Vorteil der Wiederverwendbarkeit des vordefinierten PID-Reglers der Nachteil eines großen Aufwands bei der Parametervorgabe für den PID-Regler entgegen, wenn dieser lediglich als PI-Regler eingesetzt werden soll.

An diesen beiden relativ einfachen Beispielen lässt sich bereits erkennen, dass die Verwendung von vordefinierten Funktionsbausteinen für die Lösung einer Automatisierungsaufgabe den Vorteil bietet, dass die Software zur Lösung der Automatisierungsaufgabe nicht neu geschrieben werden muss, dass aber der Einsatz eines vordefinierten Funktionsbausteins zur Lösung einer konkreten Automatisierungsaufgabe meistens die Vorgabe von erheblich mehr Parametern nötig macht, als zur Lösung der Automatisierungsaufgabe eigentlich nötig wären.

Die Realisierung von leittechnischen Funktionen beispielsweise für Kraftwerksanlagen erfolgt oft mit Hilfe von grafischen Projektierungswerkzeugen. Hierbei ist es bekannt, grafische Bausteinsymbole für die Funktionsbausteine in einem Arbeitsbereich des Projektierungswerkzeugs zu platzieren und Signalein- und Signalausgänge der Bausteinsymbole entweder mit Signalein- und/oder Signalausgängen insbesondere anderer Bausteinsymbole zu verschalten oder mit Parameterwerten zu versorgen. Derartige Systeme sind zum Beispiel aus der Patentschrift US 5 801 942 bekannt.

Aus diesen verschalteten und/oder mit Parametern versorgten Bausteinsymbolen sind Funktionspläne gebildet, welche in einem anschließenden Schritt mittels Softwarecode-Generatoren im Softwarecode übersetzt werden, der auf Automatisierungssystemen ablauffähig ist. Ältere Projektierungssysteme arbeiten teilweise auch als Interpreter, so dass dort die grafischen Funktionspläne ein direktes Abbild des Automatisierungssystems sind.

Den grafischen Funktionsplänen können verschiedene Normen zu Grunde liegen, wie beispielsweise IEC1131, IEC1499 oder VGB.

Wie bereits erwähnt, umfassen bekannte vordefinierte Funktionsbausteine meist eine Reihe von Teilfunktionen, welche mit Parametern versorgt werden müssen, auch wenn eine oder mehrere Teilfunktionen zur Lösung einer aktuellen Automatisierungsaufgabe gar nicht benötigt werden. So ist die Projektierung derartiger vordefinierter Funktionsbausteine und damit auch der entsprechenden Funktionspläne, in welchen oftmals eine große Anzahl an vordefinierten Funktionsbausteinen verschaltet sind, sehr aufwendig. Außerdem ist der Bedarf an Speicherplatz in den Automatisierungsgeräten, auf welchen der den Funktionsbausteinen und/oder Funktionsplänen entsprechende Softwarecode ablaufen soll, sehr groß.

Von vielen Anwendern von Automatisierungssystemen wird gefordert, möglichst einfache, wiederverwendbare Funktionsbausteine zur Verfügung zu stellen. Jedoch scheiterte diese Forderung bisher meistens daran, dass derartige vereinfachte Funktionsbausteine nicht mehr in der Lage sind, eine Vielzahl an Automatisierungsaufgaben zu lösen. Eine Wiederverwendbarkeit derartig vereinfachter Funktionsbausteine wäre zu sehr eingeschränkt oder zumindest auf eng begrenzte Anwendungsfälle beschränkt. Außerdem müssten dann insbesondere zur Lösung von komplexen Automatisierungsaufgaben eine Fülle von vordefinierten, vereinfachten Funktionsbausteinen zur Verfügung gestellt werden, was ein Bewahren der Übersicht über derartige, sehr umfangreiche Softwarebibliotheken kaum mehr möglich macht.

Der Erfindung liegt daher die Aufgabe zugrunde, ein verbessertes Verfahren sowie ein verbessertes Projektierungssystem zum Erzeugen eines anwendungsspezifischen Funktionsbausteins aus einem vordefinierten Funktionsbaustein anzugeben. Insbesondere soll dabei dafür Sorge getragen werden, dass der zu erzeugende anwendungsspezifische Funktionsbaustein eine hohe Qualität und eine geringe Fehleranfälligkeit aufweist.

Bezüglich des Verfahrens wird die Aufgabe erfindungsgemäß gelöst durch ein Verfahren zum Erzeugen eines anwendungsspezifischen Funktionsbausteins für ein Automatisierungssystem aus einem vordefinierten Funktionsbaustein, wobei der vordefinierte Funktionsbaustein mindestens zwei mittels Softwarecode realisierte Teilfunktionen umfasst, mit folgenden Schritten:
1. Ein Blockdiagramm, welches den vordefinierten Funktionsbaustein grafisch beschreibt, wird in ein Datenverarbeitungssystem geladen, wobei im Blockdiagramm jeder Teilfunktion mindestens ein Darstellungsblock zugeordnet ist und die Darstellungsblöcke jeweils mindestens einen Signaleingang und/oder mindestens einen Signalausgang umfassen, die mit vorgegebenen Parametern versorgt werden und/oder die mit mindestens einem Signaleingang und/oder Signalausgang eines anderen Darstellungsblocks mittels einer Verbindungslinie verbunden sind.
2. Im Blockdiagramm werden diejenigen Darstellungsblöcke und/oder Verbindungslinien, welche zur Realisierung einer gewünschten Funktionalität des anwendungsspezifischen Funktionsbausteins nicht benötigt werden, mit jeweils einer Markierung versehen, und
3. falls von den Signalausgängen der markierten Darstellungsblöcke geführte Ausgangswerte von keinem der nicht markierten Darstellungsblöcke als Eingangswerte mindestens eines ihrer jeweiligen Signaleingänge zwingend benötigt werden, um einen Ergebniswert für mindestens einen ihrer Signalausgänge zu berechnen, wird in das Automatisierungsgerät nur der Softwarecode derjenigen Teilfunktionen geladen, deren entsprechende Darstellungsblöcke nicht markiert sind,
   und,
   falls von den Signalausgängen der markierten Darstellungsblöcke geführte Ausgangswerte von mindestens einem der nicht markierten Darstellungsblöcke als Eingangswerte mindestens eines ihrer jeweiligen Signaleingänge zwingend benötigt werden, um einen Ergebniswert für mindestens einen ihrer Signalausgänge zu berechnen, wird in das Automatisierungsgerät der Softwarecode derjenigen Teilfunktionen geladen, deren entsprechende Darstellungsblöcke nicht markiert sind sowie der Softwarecode derjenigen Teilfunktionen, deren entsprechende Darstellungsblöcke markiert und deren an ihren jeweiligen Signalausgängen anliegende Ausgangswerte von mindestens einem der nicht markierten Darstellungsblöcke als Eingangswerte mindestens eines ihrer jeweiligen Signaleingänge zwingend benötigt werden.

Die Erfindung geht dabei von der Überlegung aus, dass ein anwendungsspezifischer Funktionsbaustein aus einem vordefinierten Funktionsbaustein leicht hergestellt werden kann, wenn von einem Blockdiagramm des vordefinierten Funktionsbausteins ausgegangen wird, welches den vordefinierten Funktionsbaustein sowie dessen Teilfunktionen grafisch beschreibt. Auf diese Weise sind die vom vordefinierten Funktionsbausteinen angebotenen Teilfunktionen sowie deren Relevanz für die zu lösende Automatisierungsaufgabe für den Anwender besonders leicht erkennbar. Beim erfindungsgemäßen Verfahren kann nun der Anwender diejenigen Verschaltungen zwischen den Darstellungsblöcken und diejenigen Darstellungsblöcke, welche zur Lösung der vorliegenden Automatisierungsaufgabe nicht benötigt werden, leicht erkennen und mit einer Markierung versehen. Derartige markierte Verschaltungen/Verbindungslinien und/oder Darstellungsblöcke werden dann beim Laden des entsprechenden Softwarecodes in das Automatisierungssystem nicht berücksichtigt, insoweit kein nicht markierter Darstellungsblock und/oder Verbindungslinie einen Wert zwingend benötigt, der von mindestens einem der markierten Elemente zur Verfügung gestellt wird.

Dadurch ist insbesondere die Qualität des anwendungsspezifischen Funktionsbausteins gesichert, insbesondere dahingehend, dass vom Anwender keine versehentliche Ausblendung von Softwarecode markierter Elemente stattfinden kann, was zu falschen, vom anwendungsspezifischen Funktionsbaustein berechneten Ergebnissen führen kann. Deshalb ist es beim erfindungsgemäßen Verfahren vorgesehen, dass nur der Softwarecode, der zur Lösung der Automatisierungsaufgabe notwendig ist, in das Automatisierungsgerät geladen wird, dass dabei aber auch der Softwarecode von markierten Teilfunktionen berücksichtigt wird, wenn der oder die Werte an mindestens einem entsprechenden Signalausgang zwingend als Eingangswerte mindestens einer nicht markierter Teilfunktion benötigt werden. Insofern wird beim erfindungsgemäßen Verfahren eine Fehler-/Plausibilitätskontrolle beim Laden des Softwarecodes in das Automatisierungssystem durchgeführt.

In einer Erweiterung des erfindungsgemäßen Verfahrens ist es vorstellbar, dass ein Blockdiagramm, welches markierte Darstellungsblöcke und/oder Verbindungslinien enthält, in das Datenverarbeitungssystem geladen wird, und dann neben der Markierung nicht benötigter Teilfunktionen auch ein Entfernen vorhandener Markierungen realisiert wird, so dass aus einem anwendungsspezifischen Funktionsbaustein (welcher in diesem Falle aufgefasst wird als vordefinierter Funktionsbaustein) ein weiterer, neuer anwendungsspezifischer Funktionsbaustein hergestellt werden kann gemäß der Erfindung.

In einer Weiterbildung des erfindungsgemäßen Verfahrens können in einem anschließenden Schritt die markierten Elemente mittels des Datenverarbeitungssystems aus dem Blockdiagramm grafisch ausgeblendet werden, so dass das derartig modifizierte Blockdiagramm die aktuelle Ausgestaltung des anwendungsspezifischen Funktionsbausteins, insbesondere zu Dokumentationszwecken, grafisch repräsentiert. Diese grafische Repräsentation kann dann beispielsweise ausgedruckt und/oder gespeichert werden.

Zusammenfassend lässt sich sagen, dass durch das erfindungsgemäße Verfahren sowohl beim Erstellen eines anwendungsspezifischen Funktionsbausteins als auch beim Ablauf des dem anwendungsspezifischen Funktionsbaustein zugeordneten Softwarecodes in einem Automatisierungsgerät enorme Verbesserungen im Vergleich zum Stand der Technik realisiert sind: Bei der Erstellung des anwendungsspezifischen Funktionsbausteins müssen nur die zwingend erforderlichen Teilfunktionen mit Parametern versorgt werden und beim Ablauf des anwendungsspezifischen Funktionsbausteins in einem Automatisierungsgerät muss nicht mehr der komplette Softwarecode des vordefinierten Funktionsbausteins geladen werden, was zu einem u.U. erheblichen Minderbedarf an Speicherplatz im Automatisierungssystem sowie zu einer u.U. erheblich gesteigerten Ablaufgeschwindigkeit führt.

Bezüglich des Projektierungssystem wird die Aufgabe erfindungsgemäß gelöst durch ein Projektierungssystem zum Erzeugen eines anwendungsspezifischen Funktionsbausteins für ein Automatisierungssystem aus einem vordefinierten Funktionsbaustein, wobei der vordefinierte Funktionsbaustein mindestens zwei mittels Softwarecode realisierte Teilfunktionen umfasst, mit
- einem Datenverarbeitungssystem, in welches ein Blockdiagramm, das den vordefinierten Funktionsbaustein grafisch beschreibt, einlesbar ist, wobei im Blockdiagramm jeder Teilfunktion mindestens ein Darstellungsblock zugeordnet ist und die Darstellungsblöcke jeweils mindestens einen Signaleingang und/oder mindestens einen Signalausgang umfassen, die mit vorgegebenen Parametern versorgt werden und/oder die mit mindestens einem Signaleingang und/oder Signalausgang eines anderen Darstellungsblocks mittels einer Verbindungslinie verbunden sind,
- einer vom Datenverarbeitungssystem umfassten Markierungseinrichtung, mittels welcher im Blockdiagramm diejenigen Darstellungsblöcke und/oder Verbindungslinien die zur Realisierung einer gewünschten Funktionalität des anwendungsspezifischen Funktionsbaustein nicht benötigt werden, markierbar sind, und
- einer Ladeeinrichtung, mittels welcher, falls von den Signalausgängen der markierten Darstellungsblöcke geführte Ausgangswerte von keinem der nicht markierten Darstellungsblöcke als Eingangswerte mindestens eines ihrer jeweiligen Signaleingänge zwingend benötigt werden, um einen Ergebniswert für mindestens einen ihrer Signalausgängen zu berechnen, in das Automatisierungsgerät nur der Softwarecode derjenigen Teilfunktionen einlesbar ist, deren entsprechende Darstellungsblöcke nicht markiert sind, und mittels welcher,
- falls von den Signalausgängen der markierten Darstellungsblöcke geführte Ausgangswerte von mindestens einem der nicht markierten Darstellungsblöcke als Eingangswerte mindestens eines ihrer jeweiligen Signaleingänge zwingend benötigt werden, um einen Ergebniswert für mindestens einen ihrer Signalausgänge zu berechnen, in das Automatisierungsgerät der Softwarecode derjenigen Teilfunktionen einlesbar ist, deren entsprechende Darstellungsblöcke nicht markiert sind sowie der Softwarecode derjenigen Teilfunktionen deren entsprechende Darstellungsblöcke markiert und deren an ihren jeweiligen Signalausgängen anliegende Ausgangswerte von mindestens einem der nicht markierten Darstellungsblöcke als Eingangswerte mindestens eines ihrer jeweiligen Signaleingänge zwingend benötigt werden.

Die im Zusammenhang mit den erfindungsgemäßen Verfahren gemachten Angaben und Erläuterungen können in analoger Weise auf ein erfindungsgemäßes Projektierungssystem übertragen werden und werden daher hier nicht wiederholt.

Im folgenden werden zwei Ausführungsbeispiele der Erfindung näher dargestellt.

Es zeigen:
- FIG 1: ein erfindungsgemäßes Projektierungssystem zur Erzeugung eines anwendungsspezifischen PID-Reglerbausteins, und
- FIG 2: ein erfindungsgemäßes Projektierungssystem zur Erzeugung eines anwendungsspezifischen Logarithmusbausteins.

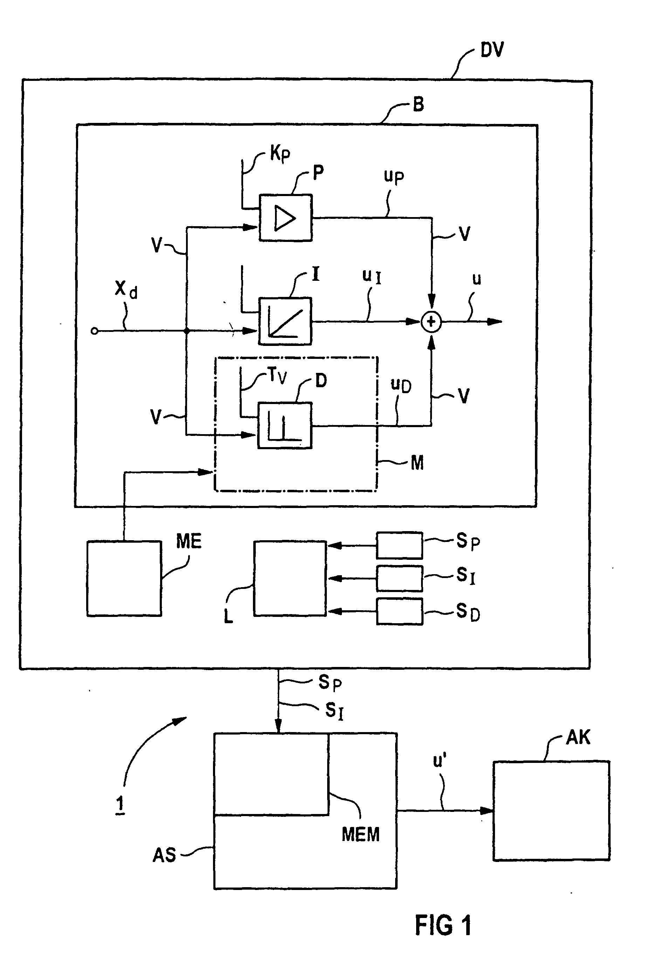

In FIG 1 ist ein erfindungsgemäßes Projektierungssystems 1 dargestellt, welches ein Datenverarbeitungssystem DV umfasst. Mittels des Projektierungssystems 1 soll aus einem vordefinierten Funktionsbaustein - hier ein mittels eines Blockdiagramms B grafisch dargestellter PID-Reglerbaustein - ein anwendungsspezifischer Funktionsbaustein erzeugt werden, wobei in diesem Ausführungsbeispiel ein PI-Reglerbaustein für ein Automatisierungsgerät AS erzeugt werden soll.

Das Blockdiagramm B ist in das Datenverarbeitungssystem DV geladen. Der mittels des Blockdiagramms B grafisch dargestellte vordefinierte Funktionsbaustein des PID-Reglers umfasst drei Teilfunktionen, nämlich einen Proportionalverstärker P, einen Integrierer I und einen Differenzierer D, welche im Blockdiagramm B jeweils durch einen Darstellungsblock visualisiert sind. Mittels dieser drei Teilfunktionen kann der Signalausgang u des PID-Reglers in Reaktion auf ein als Regelabweichung x_{d} anliegendes Regelabweichungssignal einem gewünschten zeitlichen Verlauf angepasst werden. Dies geschieht insbesondere durch eine geeignete Wahl von Parametern K_{P}, T_{N}, T_{V}. Der Parameter K_{P} ist dabei der sogenannte Proportionalverstärkungsfaktor für den Proportionalverstärker P des PID-Reglers, der Parameter T_{N} ist die vorab einzustellende Nachstellzeit für den Integrierer I des PID-Reglers und der Parameter T_{V} ist die vorzugebende Vorhaltezeit für den Differenzierer des PID-Reglers. Bei der Verwendung des vordefinierten Funktionsbaustein des PID-Reglers für eine konkret vorliegende Regelaufgabe müssen zumindest die drei genannten Parameter dem konkreten Anwendungsfall angepasst werden, um ein gewünschtes Reglerverhalten zu erzielen.

In vielen Anwendungsfällen ist beispielsweise ein PI-Regler ausreichend, um ein gutes Regelergebnis zu erzielen. Will man in einem derartigen Anwendungsfall einen vordefinierten Funktionsbaustein in Form des genannten PID-Reglers verwenden, so muss dafür Sorge tragen, dass der Anteil des Differenzierers D keinen Einfluss nimmt auf das Reglerausgangssignal u. Das Ausgangssignal u_{d} des Differenzierers darf also nicht auf das Reglerausgangssignal u geschaltet werden oder es darf zumindest das Reglerausgangssignal u nicht verändern.

In manchen Fällen kann man erreichen, dass das Ergebnis einer Teilfunktion eines vordefinierten Funktionsbausteins nicht auf das Ausgangssignal des Funktionsbausteins wirkt, indem man den oder die zur Teilfunktion gehörigen Parameter geeignet wählt. Es kann aber auch erforderlich sein, mindestens eine Verbindungslinie V, welche einen Signalein- und/oder Signalausgang der nicht gewünschten Teilfunktion eines vordefinierten Funktionsbausteins mit einer gewünschten Teilfunktion verbindet, zu deaktivieren, um einen unerwünschten Einfluss der nicht gewünschten Teilfunktion auf das Ausgangssignal zu verhindern.

Im vorliegenden Fall ist es beispielsweise nicht möglich, allein durch eine geeignete Wahl des Parameter Tᵥ den Anteil des Differenzierers D am Reglerausgangssignal u vollständig zu unterbinden.

Mittels einer Markierungseinrichtung ME, welche vom Datenverarbeitungssystem DV umfasst ist, wird der Differenzierer D mit einer Markierung M versehen, welche hier sowohl den Darstellungsblock des Differenzierers D als auch dessen Verbindungslinien V zum Reglersignaleingang x_{d} und Reglersignalausgang u umfasst.

Der zu den Darstellungsblöcken Proportionalverstärkers P, Integrierers I und Differenzierers D jeweils korrespondierende Softwarecode S_{P}, S_{I} bzw. S_{D} kann ebenfalls beispielsweise im Datenverarbeitungssystem DV abgelegt sein, insbesondere in einer Softwarebibliothek.

Mittels einer Ladeeinrichtung L wird der zum Proportionalverstärker P und Integrierer I jeweils korrespondierende Softwarecode S_{P} und S_{I} in einen Speicher MEM des Automatisierungsgeräts AS eingelesen. Der Softwarecode S_{D}, welcher zum markierten Differenzierer D einschließlich dessen ggf. markierter Verbindungslinien V korrespondiert, wird dabei nicht in das Automatisierungsgerät AS eingelesen, da im vorliegenden Ausführungsbeispiel mittels des vordefinierten Funktionsbausteins des PID-Reglers ein anwendungsspezifischer Baustein eines PI-Reglers erzeugt werden soll, bei welchem der Anteil des Differenzierers D nicht erforderlich und auch nicht erwünscht ist.

Da der Signalausgang u_{D} des Differenzierers D im vorliegenden Fall von keinem nicht markierten Darstellungsblock, also weder vom Proportionalverstärker P noch vom Integrierer I, zwingend benötigt wird, um die jeweiligen Signalausgänge u_{P} und u_{I} der genannten, nicht markierten Darstellungsblöcke zu berechnen, kann der Anteil des Differenzierers D mittels der Markierung M ausgeblendet werden und somit nur der den nicht markierten Darstellungsblöcken entsprechende Softwarecode mittels der Ladeeinrichtung L in den Speicher MEM des Automatisierungsgeräts AS geladen werden. Auf diese Weise ist insbesondere ein unnötiges Laden von nicht benötigtem Softwarecode in das Automatisierungsgerät AS verhindert, so dass zum einen der Speicher MEM des Automatisierungsgeräts AS entlastet und zum anderen die Ablaufgeschwindigkeit des dem anwendungsspezifischen Funktionsbausteins entsprechenden Softwarecodes S_{P} und S_{I} verbessert wird. Mittels eines Ausgangssignals u', welches die Ausgangssignale u_{P} und u_{I} des Proportionalverstärkers P bzw. Integrierers I umfasst, kann nun beispielsweise eine Anlagenkomponente AK einer technischen Anlage geregelt werden, wobei - wie gewünscht - ein anwendungsspezifischer PI-Regler aus dem vordefinierten Funktionsbaustein des PID-Reglers erzeugt ist.

In Folge dessen müssen nur noch der Proportionalverstärkungsfaktor K_{P} und die Nachstellzeit T_{N} als Parameter des anwendungsspezifischen PI-Reglers mit geeigneten Werten zur Erfüllung der Regelaufgabe versorgt werden; der im vordefinierten Funktionsbaustein zusätzlich vorhandene Parameter Tᵥ wird nicht benötigt und muss beim anwendungsspezifischen Funktionsbaustein des PI-Reglers nicht mit einem Wert versorgt werden, so dass sowohl der Aufwand beim Projektieren als auch die Fehleranfälligkeit bei der Ausführung der Regelung infolge einer möglichen Versorgung mit falschen Parameterwerten verringert sind.

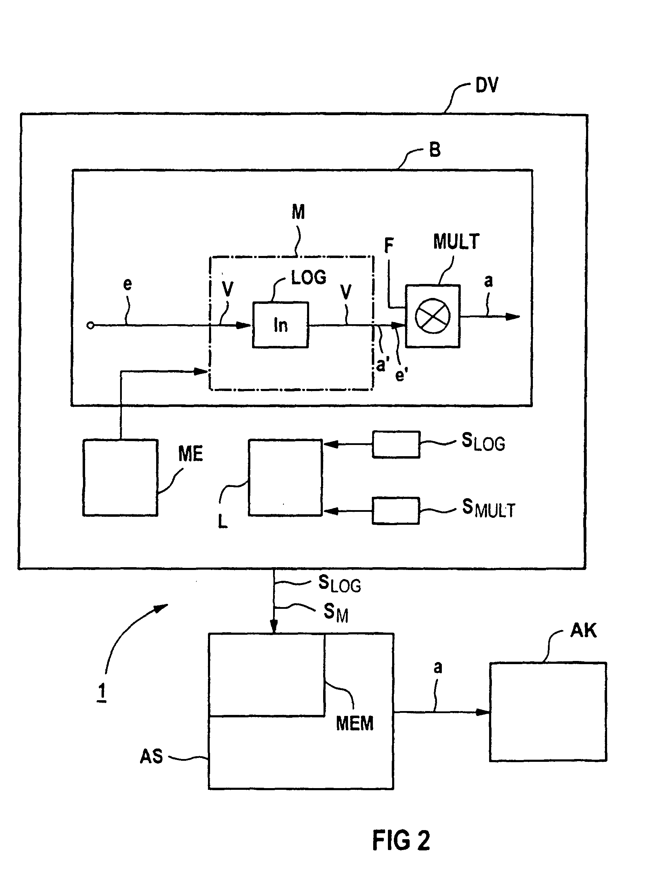

FIG 2 zeigt ein erfindungsgemäßes Projektierungssystem 1, bei welchen aus einem Blockdiagramm B eines vordefinierten Funktionsbausteins ein anwendungsspezifischer Funktionsbaustein erstellt wird.

Der vordefinierte Funktionsbaustein ist im vorliegenden Fall ein Logarithmusbaustein, mittels welchem in einer ersten Teilfunktion der Logarithmus eines als Eingangssignal e anliegenden Signals gebildet und in einer zweiten Teilfunktion dieser logarithmierte Wert a' als Eingangssignal e' in einem Multiplizierer MULT mit einem Multiplikationsfaktor F multipliziert und als ein Ausgangssignal a ausgegeben wird. Ein Anwendungsfall für einen derartigen vordefinierten Logarithmusbaustein ist beispielsweise die Berechnung der Dämpfung in Dezibel dB aus einer als Absolutwert vorliegenden Amplitude eines Signals. Die erste Teilfunktion, welche durch einen Logarithmierer LOG gebildet ist, könnte in diesem Beispiel den 10er-Logarithmus der als Eingangssignal e anliegenden Signalamplitude berechnen und die zweite, durch den Multiplizierer MULT realisierte Teilfunktion, multipliziert das Ausgangssignal a' des Logarithmierers LOG mit dem Faktor F= 20. Das korrespondierende Ausgangssignal a enspricht dann der Dämpfung der Signalamplitude ausgedrückt in Dezibel dB.

Ein Anwender, welcher nun aus dem vordefinierten Logarithmusbaustein, repräsentiert durch das Blockschaltbild B, als anwendungsspezifischen Funktionsbaustein einen einfachen Multiplizierer erzeugen möchte, könnte nun mittels einer Markierungseinrichtung ME, welche vom Datenverarbeitungssystem DV umfasst ist, den der ersten Teilfunktion des Logarithmierers LOG zugeordneten Darstellungsblock sowie dessen Verbindungslinien V zu seinem Signaleingang e bzw. Signaleingang e' des Multiplizierers MULT markieren, um dann mittels einer Ladeeinrichtung L in ein Automatisierungsgerät AS nur denjenigen Softwarecode zu laden, welcher der zweiten Teilfunktion, nämlich dem Multiplizierer MULT, entspricht.

Im vorliegenden Ausführungsbeispiel ist jedoch der am Signalausgang a' anliegende Ausgangswert des Logarithmierers LOG als Eingangswert für den Signaleingang e' des Multiplizierers MULT zwingend erforderlich. Mit anderen Worten, der Ergebniswert der der zweiten Teilfunktion vorgeschalteten ersten Teilfunktion ist für die Funktion der zweiten Teilfunktion dringend erforderlich, damit letztere überhaupt ein Ergebnis als Wert für ihren Signalausgang a berechnen kann. Im Ausführungsbeispiel der FIG 2 ist folglich gemäß der Erfindung in einen Speicher MEM des Automatisierungsgeräts AS sowohl der dem Logarithmierer LOG zugeordnete Softwarecode S_{LOG} als auch der dem Multiplizierer MULT zugeordnete Softwarecode S_{MULT} einlesbar.

Auf diese Weise ist eine Plausibilitätskontrolle dahingehend durchgeführt, ob der zum markierten Darstellungsblock korrespondierende Softwarecode S_{LOG} wirklich ausgeblendet werden kann und nicht ins Automatisierungsgerät AS geladen werden soll. Im aktuellen Beispiel muss, wenn ein Anwender den vordefinierten Funktionsbaustein zur Bearbeitung der Aufgabenstellung verwenden will, der dem Logarithmierer LOG entsprechende Softwarecode S_{LOG} zusammen mit dem dem Multiplizierer MULT zugeordneten Softwarecode S_{MULT} ins Automatisierungsgerät AS einlesbar sein, da anderenfalls der entstehende anwendungsspezifische Funktionsbaustein fehlerhaft wäre.

Würde ein Anwender im Beispiel der FIG 2 den Darstellungsblock des Multiplizierers MULT sowie dessen Verbindungslinien V zum Signalausgang a bzw. Signalausgang a' des Logarithmierers LOG markieren, um aus dem vordefinierten Funktionsbaustein den anwendungsspezifischen Funktionsbaustein eines Logarithmierers ohne anschließende Multiplikation zu erhalten, so wäre mittels der Ladeeinrichtung L nur der dem Logarithmierer LOG entsprechende Softwarecode S_{LOG} in den Speicher MEM des Automatisierungsgerät AS geladen, da das Ausgangssignal a des Multiplizierers MULT nicht zwingend als Eingangssignal der dem Multiplizierer vorgeschalteten ersten Teilfunktion des Logarithmierers erforderlich ist. Der Logarithmierer LOG würde in diesem Falle aus dem Eingangssignal e den Logarithmus e berechnen und als Ausgangssignal a' dieses Ergebnis zur Verfügung stellen.

## Patentansprüche

1. Verfahren zum Erzeugen eines anwendungsspezifischen Funktionsbausteins für ein Automatisierungsgerät (AS) aus einem vordefinierten Funktionsbaustein, wobei der vordefinierte Funktionsbaustein mindestens zwei mittels Softwarecode (S_{P},S_{I},S_{D},S_{LOG},S_{MULT}) realisierte Teilfunktionen umfasst,
**gekennzeichnet durch** folgende Schritte:
a) Ein Blockdiagramm (B), welches den vordefinierten Funktionsbaustein grafisch beschreibt, wird in ein Datenverarbeitungssystem (DV) geladen, wobei im Blockdiagramm (B) jeder Teilfunktion mindestens ein Darstellungsblock (P,I,D,LOG,MULT) zugeordnet ist und die Darstellungsblöcke (P,I,D,LOG,MULT) jeweils mindestens einen Signaleingang (e,e',x_{d}) und/oder mindestens einen Signalausgang (a,a',u_{P},u_{I},u_{D}) umfassen, die mit vorgegebenen Parametern (K_{P},T_{N},T_{V},F) versorgt werden und/oder die mit mindestens einem Signaleingang (e,e',x_{d}) und/oder Signalausgang (a,a',u_{P},u_{I},u_{D}) eines anderen Darstellungsblocks (P,I,D,LOG,MULT) mittels einer Verbindungslinie (V) verbunden sind,
b) im Blockdiagramm (B) werden diejenigen Darstellungsblöcke (P,I,D,LOG,MULT) und/oder Verbindungslinien (V), welche zur Realisierung einer gewünschten Funktionalität des anwendungsspezifischen Funktionsbausteins nicht benötigt werden, mit jeweils einer Markierung (M) versehen, und
c) falls von den Signalausgängen (a,a',u_{P},u_{I},u_{D}) der markierten Darstellungsblöcke (P,I,D,LOG,MULT) geführte Ausgangswerte von keinem der nicht markierten Darstellungsblöcke (P,I,D,LOG,MULT) als Eingangswerte mindestens eines ihrer jeweiligen Signaleingänge (e,e',x_{d}) zwingend benötigt werden, um einen Ergebniswert für mindestens einen ihrer Signalausgänge (a,a',u_{P},u_{I},u_{D}) zu berechnen, wird in das Automatisierungsgerät (AS) nur der Softwarecode (S_{P},S_{I},S_{D},S_{LOG},S_{MULT}) derjenigen Teilfunktionen geladen, deren entsprechende Darstellungsblöcke (P,I,D,LOG,MULT) nicht markiert sind,
und,
- falls von den Signalausgängen (a,a',u_{P},u_{I},u_{D}) der markierten Darstellungsblöcke (P,I,D,LOG,MULT) geführte Ausgangswerte von mindestens einem der nicht markierten Darstellungsblöcke (P,I,D,LOG,MULT) als Eingangswerte mindestens eines ihrer jeweiligen Signaleingänge (e,e',x_{d}) zwingend benötigt werden, um einen Ergebniswert für mindestens einen ihrer Signalausgänge (a,a',u_{P},u_{I},u_{D}) zu berechnen, -
wird in das Automatisierungsgerät der Softwarecode (S_{P},S_{I},S_{D},S_{LOG},S_{MULT}) derjenigen Teilfunktionen geladen, deren entsprechende Darstellungsblöcke (P,I,D,LOG,MULT) nicht markiert sind sowie der Softwarecode (S_{P},S_{I},S_{D},S_{LOG},S_{MULT}) derjenigen Teilfunktionen, deren entsprechende Darstellungsblöcke (P,I,D,LOG,MULT) markiert sind und deren an ihren jeweiligen Signalausgängen (a,a',u_{P},u_{I},u_{D}) anliegende Ausgangswerte von mindestens einem der nicht markierten Darstellungsblöcke (P,I,D,LOG,MULT) als Eingangswerte mindestens eines ihrer jeweiligen Signaleingänge (e,e',x_{d}) zwingend benötigt werden.

2. Verfahren nach Anspruch 1,
**dadurch gekennzeichnet, dass** in einem anschließenden Schritt die markierten Darstellungsblöcke (P,I,D,LOG,MULT) und/oder Verbindungslinien (V) mittels des Datenverarbeitungssystems (DV) aus dem Blockdiagramm (B) grafisch ausgeblendet werden, so dass mittels des derartig modifizierten Blockdiagramms der anwendungsspezifische Funktionsbaustein grafisch repräsentiert ist.

3. Verfahren nach Anspruch 2,
**dadurch gekennzeichnet, dass** das Datenverarbeitungssystem (DV) Mittel umfasst, mittels welcher die grafische Repräsentation des anwendungsspezifischen Funktionsbausteins archivierbar ist.

4. Projektierungssystem (1) zum Erzeugen eines anwendungsspezifischen Funktionsbausteins für ein Automatisierungsgerät (AS) aus einem vordefinierten Funktionsbaustein, wobei der vordefinierte Funktionsbaustein mindestens zwei mittels Softwarecode (S_{P},S_{I},S_{D},S_{LOG},S_{MULT}) realisierte Teilfunktionen umfasst,
**gekennzeichnet durch**
- ein Datenverarbeitungssystem (DV), in welches ein Blockdiagramm (B), das den vordefinierten Funktionsbaustein grafisch beschreibt, einlesbar ist, wobei im Blockdiagramm (B) jeder Teilfunktion mindestens ein Darstellungsblock (P,I,D,LOG,MULT) zugeordnet ist und die Darstellungsblöcke (P,I,D,LOG,MULT) jeweils mindestens einen Signaleingang (e,e',x_{d}) und/oder mindestens einen Signalausgang ((a,a',u_{P},u_{I},u_{D}) umfassen, die mit vorgegebenen Parametern versorgt werden und/oder die mit mindestens einem Signaleingang (e,e',x_{d}) und/oder Signalausgang (a,a',u_{P},u_{I},u_{D}) eines anderen Darstellungsblocks (P,I,D,LOG,MULT) mittels einer Verbindungslinie (V) verbunden sind,
- eine vom Datenverarbeitungssystem (DV) umfasste Markierungseinrichtung (ME), mittels welcher im Blockdiagramm (B) diejenigen Darstellungsblöcke (P,I,D,LOG,MULT) und/oder Verbindungslinien (V), die zur Realisierung einer gewünschten Funktionalität des anwendungsspezifischen Funktionsbausteins nicht benötigt werden, markierbar sind, und
- eine Ladeeinrichtung (L), mittels welcher, falls von den Signalausgängen (a,a',u_{P},u_{I},u_{D}) der markierten Darstellungsblöcke geführte Ausgangswerte von keinem der nicht markierten Darstellungsblöcke (P,I,O,LOG,MULT) als Eingangswerte mindestens eines ihrer jeweiligen Signaleingänge (e,e',x_{d}) zwingend benötigt werden, um einen Ergebniswert für mindestens einen ihrer Signalausgänge (a,a',u_{P},u_{I},u_{D}) zu berechnen, in das Automatisierungsgerät (AS) nur der Softwarecode (S_{P},S_{I},S_{D},S_{LOG},S_{MULT}) derjenigen Teilfunktionen einlesbar ist, deren entsprechende Darstellungsblöcke (P,I,D,LOG,MULT) nicht markiert sind, und mittels welcher,
falls von den Signalausgängen (a,a',u_{P},u_{I},u_{D}) der markierten Darstellungsblöcke (P,I,D,LOG,MULT) geführte Ausgangswerte von mindestens einem der nicht markierten Darstellungsblöcke als Eingangswerte mindestens eines ihrer jeweiligen Signaleingänge (e,e',x_{d}) zwingend benötigt werden, um einen Ergebniswert für mindestens einen ihrer Signalausgänge (a,a',u_{P},u_{I},u_{D}) zu berechnen, in das Automatisierungsgerät (AS) der Softwarecode (S_{P},S_{I},S_{D},S_{LOG},S_{MULT}) derjenigen Teilfunktionen einlesbar ist, deren entsprechende Darstellungsblöcke (P,I,D,LOG,MULT) nicht markiert sind sowie der Softwarecode (S_{P},S_{I},S_{D},S_{LOG},S_{MULT}) derjenigen Teilfunktionen, deren entsprechende Darstellungsblöcke (P,I,D,LOG,MULT) markiert sind und deren an ihren jeweiligen Signalausgängen (a,a',u_{P},u_{I},u_{D}) anliegende Ausgangswerte von mindestens einem der nicht markierten Darstellungsblöcke (P,I,D,LOG,MULT) als Eingangswerte mindestens eines ihrer jeweiligen Signaleingänge (e,e',x_{d}) zwingend benötigt werden.

5. Projektierungssystem (1) nach Anspruch 4,
**dadurch gekennzeichnet, dass** mittels des Datenverarbeitungssystems (DV) die markierten Darstellungsblöcke (P,I,D,LOG,MULT) und/oder Verbindungslinien (V) mittels des Datenverarbeitungssystems (DV) aus dem Blockdiagramm (B) grafisch ausgeblendet werden, so dass mittels des derartig modifizierten Blockdiagramms der anwendungsspezifische Funktionsbaustein grafisch repräsentiert ist.

6. Projektierungssystem (1) nach Anspruch 5,
**dadurch gekennzeichnet, dass** das Datenverarbeitungssystem (DV) Mittel umfasst, mittels welcher die grafische Repräsentation des anwendungsspezifischen Funktionsbausteins archivierbar ist.

## Claims

1. Method for producing an application-specific functional module for a programmable controller (AS) from a predefined functional module, the predefined functional module comprising at least two subfunctions implemented by means of software code (S_{P}, S_{I}, S_{D}, S_{LOG}, S_{MULT}),
**characterized by** the following steps:
a) a block diagram (B) graphically describing the predefined functional module is loaded into a data processing system (DV), each subfunction having at least one associated representational block (P, I, D, LOG, MULT) in the block diagram (B), and the representational blocks (P, I, D, LOG, MULT) each comprising at least one signal input (e, e', x_{d}) and/or at least one signal output (a, a', u_{P}, u_{I}, U_{D}) which are supplied with prescribed parameters (K_{P}, T_{N}, T_{V}, F) and/or which are connected to at least one signal input (e, e', x_{d}) and/or signal output (a, a', u_{P}, u_{I}, u_{D}) on another representational block (P, I, D, LOG, MULT) by means of a connecting line (V),
b) those representational blocks (P, I, D, LOG, MULT) and/or connecting lines (V) which are not needed for implementing a desired functionality of the application-specific functional module are provided with a respective marking (M) in the block diagram (B), and
c) if output values supplied by the signal outputs (a, a', u_{P}, u_{I}, u_{D}) of the marked representational blocks (P, I, D, LOG, MULT) are not imperatively required by any of the unmarked representational blocks (P, I, D, LOG, MULT) as input values for at least one of their respective signal inputs (e, e', x_{d}) for the purpose of calculating a result value for at least one of their signal outputs (a, a', u_{P}, u_{I}, u_{D}),
the programmable controller (AS) is loaded only with the software code (S_{P}, S_{I}, S_{D}, S_{LOG}, S_{MULT}) for those subfunctions whose corresponding representational blocks (P, I, D, LOG, MULT) are unmarked,
and,
- if output values supplied by the signal outputs (a, a', u_{P}, u_{I}, u_{D}) of the marked representational blocks (P, I, D, LOG, MULT) are imperatively required by at least one of the unmarked representational blocks (P, I, D, LOG, MULT) as input values for at least one of their respective signal inputs (e, e', x_{d}) for the purpose of calculating a result value for at least one of their signal outputs (a, a', u_{P}, u_{I}, u_{D}), the programmable controller is loaded with the software code (S_{P}, S_{I}, S_{D}, S_{LOG}, S_{MULT}) for those subfunctions whose corresponding representational blocks (P, I, D, LOG, MULT) are unmarked and with the software code (S_{P}, S_{I}, S_{D}, S_{LOG}, S_{MULT}) for those subfunctions whose corresponding representational blocks (P, I, D, LOG, MULT) are marked and whose output values applied to their respective signal outputs (a, a', u_{P}, u_{I}, u_{D}) are imperatively required by at least one of the unmarked representational blocks (P, I, D, LOG, MULT) as input values for at least one of their respective signal inputs (e, e', x_{d}).

2. Method according to Claim 1,
**characterized in that** in a subsequent step, the marked representational blocks (P, I, D, LOG, MULT) and/or connecting lines (V) are graphically masked out of the block diagram (B) by means of the data processing system (DV), so that the block diagram modified in this manner is used for graphically representing the application-specific functional module.

3. Method according to Claim 2,
**characterized in that** the data processing system (DV) comprises means which can be used to archive the graphical representation of the application-specific functional module.

4. Configuration system (1) for producing an application-specific functional module for a programmable controller (AS) from a predefined functional module, the predefined functional module comprising at least two subfunctions implemented by means of software code (S_{P}, S_{I}, S_{D}, S_{LOG}, S_{MULT}),
**characterized by**
- a data processing system (DV) into which a block diagram (B) graphically describing the predefined functional module can be read, each subfunction having at least one associated representational block (P, I, D, LOG, MULT) in the block diagram (B), and the representational blocks (P, I, D, LOG, MULT) each comprising at least one signal input (e, e', x_{d}) and/or at least one signal output (a, a', u_{P}, u_{I}, U_{D}) which are supplied with prescribed parameters and/or which are connected to at least one signal input (e, e', x_{d}) and/or signal output (a, a', u_{P}, u_{I}, u_{D}) on another representational block (P, I, D, LOG, MULT) by means of a connecting line (V),
- a marking device (ME) which is included in the data processing system (DV) and can be used to mark those representational blocks (P, I, D, LOG, MULT) and/or connecting lines (V) in the block diagram (B) which are not needed in order to produce a desired functionality of the application-specific functional module, and
- a loading device (L) which, if output values supplied by the signal outputs (a, a', u_{P}, u_{I}, u_{D}) of the marked representational blocks are not imperatively required by any of the unmarked representational blocks (P, I, D, LOG, MULT) as input values for at least one of their respective signal inputs (e, e', x_{d}) for the purpose of calculating a result value for at least one of their signal outputs (a, a', u_{P}, u_{I}, u_{D}), can be used to read into the programmable controller (AS) only the software code (S_{P}, S_{I}, S_{D}, S_{LOG}, S_{MULT}) for those subfunctions whose corresponding representational blocks (P, I, D, LOG, MULT) are unmarked,
and which,
if output values supplied by the signal outputs (a, a', u_{P}, u_{I}, u_{D}) of the marked representational blocks (P, I, D, LOG, MULT) are imperatively required by at least one of the unmarked representational blocks as input values for at least one of their respective signal inputs (e, e', x_{d}) for the purpose of calculating a result value for at least one of their signal outputs (a, a' , u_{P}, u_{I}, u_{D}), can be used to read into the programmable controller (AS) the software code (S_{P}, S_{I}, S_{D}, S_{LOG}, S_{MULT}) for those subfunctions whose corresponding representational blocks (P, I, D, LOG, MULT) are unmarked and also the software code (S_{P}, S_{I}, S_{D}, S_{LOG}, S_{MULT}) for those subfunctions whose corresponding representational blocks (P, I, D, LOG, MULT) are marked and whose output values applied to their respective signal outputs (a, a', u_{P}, u_{I}, u_{D}) are imperatively required by at least one of the unmarked representational blocks (P, I, D, LOG, MULT) as input values for at least one of their respective signal inputs (e, e', x_{d}).

5. Configuration system (1) according to Claim 4,
**characterized in that** the data processing system (DV) is used for graphically masking out the marked representational blocks (P, I, D, LOG, MULT) and/or connecting lines (V) from the block diagram (B) by means of the data processing system (DV), so that the block diagram modified in this manner is used for graphically representing the application-specific functional module.

6. Configuration system (1) according to Claim 5,
**characterized in that** the data processing system (DV) comprises means which can be used to archive the graphical representation of the application-specific functional module.

## Revendications

1. Procédé pour produire un module fonctionnel spécifique à une application pour un appareil automatisé (AS) à partir d'un module fonctionnel prédéfini, le module fonctionnel prédéfini comprenant au moins deux sous-fonctions réalisées au moyen de codes logiciels (S_{P}, S_{I}, S_{D}, S_{LOG}, S_{MULT}),
**caractérisé par** les étapes suivantes :
a) on charge un schéma fonctionnel (B), qui décrit graphiquement le module fonctionnel prédéfini, dans un système de traitement de données (DV), au moins un bloc de représentation (P, I, D, LOG, MULT) étant associé à chaque sous-fonction dans le schéma fonctionnel (B) et les blocs de représentation (P, I, D, LOG, MULT) comprenant chacun au moins une entrée de signal (e, e', x_{d}) et/ou au moins une sortie de signal (a, a', u_{P}, u_{I}, u_{D}) qui sont alimentées avec des paramètres prédéterminés (K_{P}, T_{N}, T_{V}, F) et/ou qui sont reliées à au moins une entrée de signal (e, e', x_{d}) et/ou une sortie de signal (a, a', u_{P}, u_{I}, u_{D}) d'un autre bloc de représentation (P, I, D, LOG, MULT) au moyen d'une ligne de liaison (V),
b) dans le schéma fonctionnel (B), on munit à chaque fois d'une marque (M) ceux des blocs de représentation (P, I, D, LOG, MULT) et/ou lignes de liaison (V) qui ne sont pas nécessaires à la réalisation d'une fonctionnalité souhaitée du module fonctionnel spécifique à l'application, et
c) si des valeurs de sortie transmises par les sorties de signaux (a, a', up, u_{I}, u_{D}) des blocs de représentation (P, I, D, LOG, MULT) marqués ne sont absolument nécessaires à aucun des blocs de représentation (P, I, D, LOG, MULT) non marqués comme valeurs d'entrée d'au moins l'une de ses entrées de signaux respectives (e, e', x_{d}) pour calculer une valeur de résultat pour au moins l'une de ses sorties de signaux (a, a', u_{P}, u_{I}, u_{D}),
on ne charge dans l'appareil automatisé (AS) que le code logiciel (S_{P}, S_{I}, S_{D}, S_{LOG}, S_{MULT}) de celles des sous-fonctions dont les blocs de représentation (P, I, D, LOG, MULT) correspondants ne sont pas marqués,
et,
- si des valeurs de sortie transmises par les sorties de signaux (a, a', u_{P}, u_{I}, u_{D}) des blocs de représentation (P, I, D, LOG, MULT) marqués sont absolument nécessaires à au moins l'un des blocs de représentation (P, I, D, LOG, MULT) non marqués comme valeurs d'entrée d'au moins l'une de ses entrées de signaux (e, e', x_{d}) respectives pour calculer une valeur de résultat pour au moins l'une de ses sorties de signaux (a, a', u_{P}, u_{I}, u_{D}),
on charge dans l'appareil automatisé le code logiciel (S_{P}, S_{I}, S_{D}, S_{LOG}, S_{MULT}) de celles des sous-fonctions dont les blocs de représentation (P, I, D, LOG, MULT) correspondants ne sont pas marqués ainsi que le code logiciel (S_{P}, S_{I}, S_{D}, S_{LOG}, S_{MULT}) de celles des sous-fonctions dont les blocs de représentation (P, I, D, LOG, MULT) correspondants sont marqués et dont les valeurs de sortie présentes à leurs sorties de signaux (a, a', u_{P}, u_{I}, u_{D}) respectives sont absolument nécessaires à au moins l'un des blocs de représentation (P, I, D, LOG, MULT) non marqués comme valeurs d'entrée d'au moins l'une de ses entrées de signaux (e, e', x_{d}) respectives.

2. Procédé selon la revendication 1,
**caractérisé par le fait que**, lors d'une étape suivante, au moyen du système de traitement de données (DV), on supprime graphiquement du schéma fonctionnel (B) les blocs de représentation (P, I, D, LOG, MULT) marqués et/ou les lignes de liaison (V) marquées de telle sorte que le module fonctionnel spécifique à l'application est représenté graphiquement au moyen du schéma fonctionnel ainsi modifié.

3. Procédé selon la revendication 2,
**caractérisé par le fait que** le système de traitement de données (DV) comprend des moyens avec lesquels la représentation graphique du module fonctionnel spécifique à l'application peut être archivée.

4. Système de développement (1) pour produire un module fonctionnel spécifique à une application pour un appareil automatisé (AS) à partir d'un module fonctionnel prédéfini, le module fonctionnel prédéfini comprenant au moins deux sous-fonctions réalisées au moyen de codes logiciels (S_{P}, S_{I}, S_{D}, S_{LOG}, S_{MULT}),
**caractérisé par**
- un système de traitement de données (DV) dans lequel peut être enregistré un schéma fonctionnel (B) qui décrit graphiquement le module fonctionnel prédéfini, au moins un bloc de représentation (P, I, D, LOG, MULT) étant associé à chaque sous-fonction dans le schéma fonctionnel (B) et les blocs de représentation (P, I, D, LOG, MULT) comprenant chacun au moins une entrée de signal (e, e', x_{d}) et/ou au moins une sortie de signal (a, a', u_{P}, u_{I}, u_{D}) qui sont alimentées avec des paramètres prédéterminés et/ou qui sont reliées à au moins une entrée de signal (e, e', x_{d}) et/ou une sortie de signal (a, a', u_{P}, u_{I}, u_{D}) d'un autre bloc de représentation (P, I, D, LOG, MULT) au moyen d'une ligne de liaison (V),
- un dispositif de marquage (ME) qui est compris par le système de traitement de données (DV) et au moyen duquel, dans le schéma fonctionnel (B), ceux des blocs de représentation (P, I, D, LOG, MULT) et/ou lignes de liaison (V) qui ne sont pas nécessaires à la réalisation d'une fonctionnalité souhaitée du module fonctionnel spécifique à l'application peuvent être marqués, et
- un dispositif de chargement (L), au moyen duquel,
si des valeurs de sortie transmises par les sorties de signaux (a, a', up, u_{I}, u_{D}) des blocs de représentation (P, I, D, LOG, MULT) marqués ne sont absolument nécessaires à aucun des blocs de représentation (P, I, D, LOG, MULT) non marqués comme valeurs d'entrée d'au moins l'une de ses entrées de signaux (e, e', x_{d}) respectives pour calculer une valeur de résultat pour au moins l'une de ses sorties de signaux (a, a', u_{P}, u_{I}, u_{D}), on n'enregistre dans l'appareil automatisé (AS) que le code logiciel (S_{P}, S_{I}, S_{D}, S_{LOG}, S_{MULT}) de celles des sous-fonctions dont les blocs de représentation (P, I, D, LOG, MULT) correspondants ne sont pas marqués
et au moyen duquel,
si des valeurs de sortie transmises par les sorties de signaux (a, a', u_{P}, u_{I}, u_{D}) des blocs de représentation (P, I, D, LOG, MULT) marqués sont absolument nécessaires à au moins l'un des blocs de représentation non marqués comme valeurs d'entrée d'au moins l'une de ses entrées de signaux (e, e', x_{d}) respectives pour calculer une valeur de résultat pour au moins l'une de ses sorties de signaux (a, a', u_{P}, u_{I}, u_{D}), on enregistre dans l'appareil automatisé (AS) le code logiciel (S_{P}, S_{I}, S_{D}, S_{LOG}, S_{MULT}) de celles des sous-fonctions dont les blocs de représentation (P, I, D, LOG, MULT) correspondants ne sont pas marqués ainsi que le code logiciel (S_{P}, S_{I}, S_{D}, S_{LOG}, S_{MULT}) de celles des sous-fonctions dont les blocs de représentation (P, I, D, LOG, MULT) correspondants sont marqués et dont les valeurs de sortie présentes à leurs sorties de signaux (a, a', u_{P}, u_{I}, u_{D}) respectives sont absolument nécessaires à au moins l'un des blocs de représentation (P, I, D, LOG, MULT) non marqués comme valeurs d'entrée d'au moins l'une de ses entrées de signaux (e, e', x_{d}) respectives.

5. Système de développement (1) selon la revendication 4,
**caractérisé par le fait que**, au moyen du système de traitement de données (DV), les blocs de représentation (P, I, D, LOG, MULT) marqués et/ou les lignes de liaison (V) marquées sont supprimés graphiquement du schéma fonctionnel (B) de telle sorte que le module fonctionnel spécifique à l'application est représenté graphiquement au moyen du schéma fonctionnel ainsi modifié.

6. Système de développement (1) selon la revendication 5,
**caractérisé par le fait que** le système de traitement de données (DV) comprend des moyens avec lesquels la représentation graphique du module fonctionnel spécifique à l'application peut être archivée.
